# EUROPÄISCHE PATENTSCHRIFT

(11) **EP 2 148 474 B1**
(45) Veröffentlichungstag und Bekanntmachung des Hinweises auf die Patenterteilung: **21.11.2012**
(21) Anmeldenummer: 09450128.5
(22) Anmeldetag: 15.07.2009
(51) Int. Cl.: H04L 12/44

(54) **Sternkoppler für zeitgesteuerte Kommunikationssysteme**
Star coupler for time-controlled communication systems
Coupleur en étoile pour systèmes de communication commandés dans le temps

(30) Priorität: 25.07.2008 AT 11602008
(43) Veröffentlichungstag der Anmeldung: 27.01.2010
(73) Patentinhaber: TTTech Computertechnik AG, 1040 Wien (AT)
(72) Erfinder: Angelow, Harald, 1070 Wien (AT)
(74) Vertreter: Patentanwaltskanzlei Matschnig & Forsthuber OG

(56) Entgegenhaltungen:
- EP-A- 2 053 830
- KOPETZ H ET AL: "The Time-Triggered Ethernet (TTE) Design" OBJECT-ORIENTED REAL-TIME DISTRIBUTED COMPUTING, 2005. ISORC 2005. EIG HTH IEEE INTERNATIONAL SYMPOSIUM ON SEATTLE, WA, USA 18-20 MAY 2005, PISCATAWAY, NJ, USA,IEEE, 18. Mai 2005 (2005-05-18), Seiten 22-33, XP010801230 ISBN: 978-0-7695-2356-9
- KOPETZ H: "A Comparison of TTP/C and FlexRay" INTERNET CITATION, [Online] XP002216066 Gefunden im Internet: URL:www.informatik.uni-ulm.de/rs/projekte/ core/rts1/tech.docs2/TTP-flexray-kopetz.pd f> [gefunden am 2002-10-09]

## Beschreibung

Die Erfindung betrifft ein Verfahren zum Weiterleiten von Nachrichten in einem zeitgesteuerten Kommunikationssystem, welches aus einer Vielzahl von Kommunikationsknoten besteht, wobei jeder Knoten über eine Datenleitung mit einem dem Knoten eindeutig zugeordneten Port zumindest eines Sternkopplers verbunden ist, welcher Nachrichten von je einem der Ports (als Quellport bezeichnet) zu einem oder mehreren anderen Ports (als Zielports bezeichnet) gemäß konfigurierbaren Weiterleitungswegen weiterleitet; hierbei erfolgt seitens des Sternkopplers eine Umschaltung der Weiterleitungswege nach einer im Sternkoppler festgelegten Vorschrift, welche die Weiterleitungswege für Nachrichten beschreibt; diese Umschaltung der Weiterleitungswege erfolgt zumindest im synchronisierten Betriebszustand des Sternkopplers. Die Weiterleitungswege werden dabei in Abhängigkeit von der Zeit gemäß einer globalen Zeitbasis des zeitgesteuerten Kommunikationsystems umgeschaltet, und zu zumindest einer Zeit (genauer in zumindest einem der Slots) sieht die Vorschrift zumindest zwei Weiterleitungswege zugleich vor; zu übereinstimmenden Zeiten stattfindende Weiterleitungswege sind zueinander disjunkt, mit anderen Worten, jeder Port gehört zu jeder Zeit zu jeweils höchstens einem Weiterleitungsweg.

Die Erfindung betrifft weiters einen Sternkoppler zur Durchführung dieses Verfahrens.

Ein Verfahren und einen Sternkoppler dieser Art ist in der WO 2008/029320 A2 beschrieben.

Ein Beispiel für den Typus der hier betrachteten zeitgesteuerten Kommunikationssysteme sind insbesondere auf dem FlexRay-Standard beruhende Systeme. Diese System sind verteilte Computersysteme mit zeitgesteuerten Übertragungsprotokollen und einer globalen Zeitbasis, wie sie vor allem in Zusammenhang mit fehlertoleranten Echtzeitanwendungen bekannt geworden sind, siehe hierzu auch die WO 94/06080 A1 (= US 5,694,542) und die WO 01/13230 A1 (= US 2003/0154427 A1) der Anmelderin. Ein anderes Beispiel wird in Kopatz, H. et al: "The Tune-Triggered Ethernet (TTE) Design", XP010801230, beschrieben.

Auch zeitgesteuerte Übertragungsprotokolle bzw. Kommunikationssysteme zur Übertragung von Nachrichten zwischen Netzknoten eines verteilten Computersystems sind dem Fachmann in großer Zahl bekannt. Die hier betrachteten Protokolle bzw. Kommunikationssysteme, wie z.B. FlexRay, beruhen auf einem sogenannten Time Division Multiple Access Verfahren oder kurz TDMA-Verfahren. Bei TDMA handelt es sich um ein Zeitmultiplex-Verfahren, bei dem jedem Knoten eine feste Anzahl von TDMA-Slots pro "TDMA-Umlauf" zugeordnet wird.

Beim Zeitmultiplex erfolgt die Datenübertragung zwischen den Netzknoten in einem definierten Multiplexrahmen, in dem für jeden Übertragungskanal ein fester Zeitschlitz ("Slot") vorhanden ist. Die einzelnen Zeitschlitze werden nacheinander abgearbeitet. Ist eine Zeiteinheit abgelaufen, wird die Übertragung für den aktiven Kanal kurzfristig unterbrochen; die Übertragungsbandbreite steht dann dem nächsten Benutzer zur Verfügung.

Unter einem TDMA-Slot (im Folgenden kurz Slot), wird ein Zeitintervall verstanden mit Beginn und Ende, die auf einer systemweit bekannten Zeitbasis definiert sind. Diese innerhalb des verteilten Computersystems allen Netzknoten bekannte Zeitbasis wird im Folgenden als globale Zeitbasis oder auch "globaler Zeitgeber" bezeichnet. Jeder Slot ist allen Netzknoten in gleicher Weise bekannt. Die einzelnen Slots sind zueinander disjunkt, überlappen sich also nicht. In einem Slot eines TDMA-Systems kann maximal ein Netzknoten eine Übertragung durchführen. Die Slots können nach den Bedürfnissen einzelner Netzknoten ausgerichtet sein. Wenn diese Bedürfnisse bekannt sind, kann mit TDMA eine hohe Buslast ohne Indeterminismus erzielt werden. Wie auch bei anderen konfliktvermeidenden Schemata, müssen bei TDMA alle Stationen vollständig zeitsynchronisiert sein.

Die bereits erwähnte WO 2008/029320 A2 beschreibt eine Erweiterung dieses TDMA-Systems im Sinne einer vermittlungsartigen Funktionalität, die eine parallele Weiterleitung von Nachrichten zulässt, die von verschiedenen Sendern stammen können.

Seitens der Anmelderin wurde festgestellt, dass die Situation häufig vorkommt, dass Nachrichten eines bestimmten Senders nur von einer kleinen Anzahl von Empfängern verarbeitet wird. Neben einer vermittlungsartigen Funktionalität, die eine parallele Weiterleitung von Nachrichten zulässt, die von verschiedenen Sendern stammen können, soll darüber hinaus das Nachrichtenaufkommen verringert werden.

Die gestellte Aufgabe wird ausgehend von einem Verfahren gemäß Anspruch 1.

Eine derartige Invalidierung ist im Stadium des Hochfahrens des Kommunikationssystems zweckmäßig und zwar für Nachrichten, die keine Startup- und/oder Synchronsiationsnachrichten sind. Dem entsprechend erfolgt diese Überprüfung aufgrund des Inhalts der Nachricht in einem nicht-synchronisierten Betriebszustand während des bereits begonnenen Weiterleitens einer Nachricht.

In dem nicht-synchronisierten Betriebszustand ist somit vorgesehen, dass nur solche Nachrichten unbeeinträchtigt - nämlich ohne Weiterleitungsabbruch oder Invalidierung - weitergeleitet werden, die Hochstart-Nachrichten oder Synchronisations-Nachrichten sind.

Im synchronen Betrieb ist die Zeit nach der globalen Zeitbasis notwendig und hinreichend um die zu schaltenden Weiterleitungswege zu bestimmen; Synchronisierter Betrieb des Sternkopplers liegt wie an sich bekannt vor, sobald die private Uhr des Sternkopplers sich mit den privaten Uhren der anderen Netzwerkteilnehmer innerhalb eines konstanten Intervalls, auch bekannt als Präzision, befindet.

Es sei an dieser Stelle betont, dass nicht für jeden Slot gelten muss, dass zwei oder mehr Weiterleitungswege gleichzeitig bestehen; dies kann vielmehr für einen, mehrere oder alle Slots eingerichtet sein, je nach Maßgabe der konfigurierten Anwendung. In den übrigen Slots ist dann nur ein Weiterleitungsweg (bei dem von einem Quellport auf einen, mehrere oder alle andere Zielports weitergeleitet wird) oder gar kein Weiterleitungsweg eingerichtet.

Im nicht-synchronisierten Betriebszustand (asynchroner Betrieb) dagegen, ist es in einer Weiterbildung der Erfindung günstig, wenn zeitunabhängig ein Weiterleitungsweg besteht und auf Grund des Nachrichteninhaltes und/oder der Port-Zuordnung entschieden wird, ob eine Nachricht weitergeleitet oder abgebrochen wird.

Die Erfindung ermöglicht eine beschränkte Durchbrechung des strengen TDMA-Prinzips, und dadurch die parallele Weiterleitung von Nachrichten, die zeitlich überlappend bei dem Sternkoppler eintreffen. Der Sternkoppler leitet derartige Nachrichten parallel an die Zielknoten weiter ("Multirouting"), in dem er mehrere disjunkte Weiterleitungswege frei schaltet. Durch diesen Parallelbetrieb der Datenströme ergibt sich eine deutliche Erhöhung der zur Verfügung stehenden Bandbreite.

Ein weiterer Vorteil der Erfindung ist, dass Konfigurationsänderungen nur an solchen Endgeräten erforderlich sind, die von der Einführung eines Multirouters oder von den dadurch ermöglichten parallel erfolgenden Datenströmen auch funktional betroffen sind. Die Änderungen können jedoch auch hierbei auf einfach zu programmierende Konfigurationsanpassungen beschränkt werden, dass die Endgeräte weiterhin nach dem standardgemäßen Protokoll (insbesondere FlexRay) arbeiten können. Diese Eigenschaft ist auch als "Drop-In" bekannt: Ein erfindungsgemäßer Multirouter kann transparent in ein bestehenden Netzwerk, insbesondere FlexRay-Netzwerk, integriert werden, ohne dass hierbei Änderungen an der Konfiguration der im Netzwerk bestehenden Knoten vorgenommen werden müssten.

In einer bevorzugten Ausführungsform findet das Umschalten zumindest im synchronisierten Betriebszustand ausschließlich in Abhängigkeit von der Zeit statt, ohne Verwendung zusätzlicher Information wie z.B. zusätzlicher Steuersignale.

Um eine zügige Weiterleitung zumindest eines Teils der Nachrichten zu erreichen, kann die Weiterleitung nach einem Cut-Through-Verfahren erfolgen. Hierbei wird die Weiterleitung einer Nachrichten noch vor Beendigung des Empfangs der Nachricht begonnen, insbesondere ohne speichernde Pufferung der Nachrichten.

Das erfindungsgemäße Verfahren eignet sich in besonderem Maße zu Realisierung in einem Kommunikationssystem, in dem ein auf einem FlexRay-Standard beruhendes zeitgesteuertes Kommunikationsprotokoll verwendet wird.

In dem zeitgesteuerten Kommunikationssystem können vorteilhafter Weise mehrere Sternkoppler verwendet werden, die über eine oder mehrere Datenleitungen untereinander direkt oder indirekt verbunden sind, und ein geschlossenes Netzwerk bilden.

Zur effizienteren Behandlung von Nachrichten, die der Synchronisation des Systems und des Multirouters selbst dienen, ist es günstig, wenn in einem nicht-synchronisierten Betriebszustand eine Vorschrift für die Weiterleitung verwendet wird, die die unabhängig von der Zeit ist. Bei der Auswahl der Zielports aufgrund des Quellports einer Nachricht wird somit lediglich die Identifikation des Ports verwendet. In diesem asynchronen Betrieb ist demgemäß der Port (die Port-Identifikation) notwendig und hinreichend um die Weiterleitungswege zu bestimmen.

Gleichermaßen wird die Erfindung von einem Sternkoppler gemäß Anspruch 9 gelöst, der (als "Multirouter") zur Durchführung des genannten erfindungsgemäßen Verfahrens eingerichtet ist. Die Vorteile und Weiterbildungen des Sternkopplers stimmen mit denen des erfindungsgemäßen Verfahrens überein.

Die Erfindung wird im Folgenden anhand eines nicht einschränkenden Ausführungsbeispiels erläutert, das in den beigefügten Zeichnungen dargestellt ist. Die Zeichnungen zeigen
- Fig. 1: ein FlexRay-Netz mit einem erfindungsgemäßen Multirouter;
- Fig. 2: illustriert die Arbeitsweise eines 'Bus Guardian' des FlexRay gemäß dem Stand der Technik;
- Fig. 3: veranschaulicht beispielhaft das Routing im Multirouters der Fig. 1;
- Fig. 4A: zeigt eine Routingtabelle, die dem in Fig. 3 dargestellten Routing entspricht, und
- Fig. 4B: eine Routingtabelle für einen anderen Slot; sowie
- Fig. 5: eine Routingtabelle für den nicht-synchronisierten Betrieb des Multirouters.

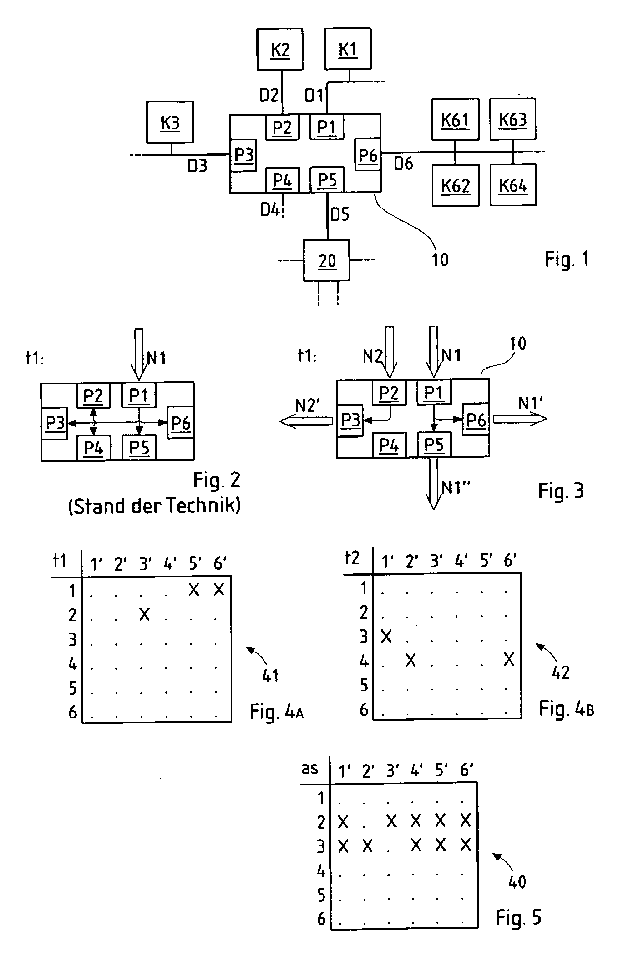

Gemäß Fig. 1 weist ein als erfindungsgemäßer Multirouter 10 ausgeführter Sternkoppler eine Anzahl von Ports auf; in Fig. 1 sind beispielhaft sechs Ports P1...P6 gezeigt. Jeder Port P1...P6 kann über je eine Datenleitung D1...D6 mit einem Teilnetz verbunden werden, das jeweils von zumindest einem Knotenrechner Kn gebildet wird. In Fig. 1 sind beispielhaft Knotenrechner K1, K2, K3 sowie K61, K62, K63, K64 gezeigt. Wie am Beispiel der Knoten K61...K64 gezeigt, sind über eine Datenleitung häufig mehrere Knoten in einem Teilnetz angeschlossen. Die Datenleitung D6 dient als Bus für diese Knoten. Selbstverständlich sind auch andere Konfigurationen der Teilnetze möglich; insbesondere kann die Zahl der Knoten in einem Teilnetz je nach Anwendungsfall variieren. Die Anzahl der Ports ist grundsätzlich beliebig und es kann jeder Wert ab 2, zweckmäßiger Weise ab 4, gewählt werden. Es können auch soviele Ports implementiert sein, wie Knoten im System vorliegen.

Die Kommunikation innerhalb jedes Teilnetzes, genauer über jede der Datenleitungen D1...D6, erfolgt gemäß dem FlexRay-Standard. Dadurch ist es möglich, an die Datenleitungen konventionelle FlexRay-Knoten anzuschließen, ohne das sie für die Implementierung der Erfindung modifiziert werden müssten. Die Teilnetze sind ausschließlich über den Multirouter 10 miteinander verbunden. Auch seitens des Multirouters 10 erfolgt das Empfangen und Senden von Nachrichten über jeden der Ports P1...P6, jeweils für sich gesehen, gemäß dem FlexRay-Standard.

Die Knotenrechner K1...K64 können beispielsweise wie in der WO 01/13230 A1 beschrieben realisiert sein.

Fig. 2 illustriert eine dem FlexRay-Standard konforme Verarbeitung einer bei einem Sternkoppler einlangende Nachricht im Sinne eines bekannten sogenannten 'Bus Guardian'. Der FlexRay-Standard beruht auf dem Broadcast-Prinzip und verlangt demgemäß, dass zu jedem Zeitpunkt in dem Netz nur jeweils ein Knoten als Sender aktiv ist, also im gezeigten Beispiel der Knoten K1. Die Sendereihenfolge, also wann ein Knoten Nachrichten senden darf, ist im Voraus festgelegt. Im betrachteten Beispiel ist beispielsweise der Slot (Zeitschlitz) t1 für den Knoten K1 reserviert. Gezeigt ist eine Nachricht N1, die im Slot t1 beispielsweise bei Port P1 eintrifft. Diese Nachricht N1 wird derart weitergeleitet, dass sie auf alle anderen Ports P2...P6 kopiert wird. (Gegebenenfalls dürfen unbelegte Ports, also ohne dort angeschlossene Knotenrechner, unberücksichtigt bleiben.) Die Nachricht wird somit an alle anderen Netzknoten weitergeleitet. Nachrichten, die zu t1 über andere Ports als Port P1 eintreffen, werden dagegen verworfen.

Die Erfindung ermöglicht über den FlexRay-Standard hinaus, dass in einem Slot mehrere sendende Knoten zugelassen werden, sofern diese sendenden Knoten jeweils auf verschiedene Ports verteilt sind.

Fig. 3 illustriert ein Beispiel gleichzeitig sendender Knoten gemäß der Erfindung. Für den Slot t1 ist zugelassen, dass über zwei Ports P1, P2 des Multirouters 10 Nachrichten empfangen werden können. Eine auf Port P1 eintreffende Nachricht N1 wird beispielsweise über Ports P5 und P6 weitergeleitet und in Form der ausgehenden Nachrichten N1', N1" auf diese Weise allen dort angeschlossenen Knoten zugänglich gemacht, während eine auf Port P2 eintreffende Nachricht N2 an Port P3 weitergeleitet wird (ausgehende Nachricht N2'). Es ist hierbei auch möglich, dass andere Ports, wie etwa im Beispiel Port P4, in dem betrachteten Slot t1 keine Nachrichten erhalten.

Die Information, auf welche Weise Nachrichten zu jedem Slot weiterzuleiten sind, ist im Vorhinein festgelegt, beispielsweise in Form statischer Routinginformation, nämlich als während des Betriebs des Netzes ungeänderte Konfiguration in Form von Routingtabellen seitens des Multirouters. Fig. 4A zeigt eine Routingtabelle 41, die dem in Fig. 3 beschriebenen Sachverhalt entspricht. Jede der Zeilen 1 bis 6 entspricht einem sendenden Port gleicher Nummer (Zeile n dem Quellport Pn), worin in jeder Spalte eingetragen ist, auf welche Ports eine Nachricht weiterzuleiten ist (Spalte n' auf Zielport Pn). Beispielsweise bedeutet Zeile 1, dass im Slot t1 eine über Port P1 eintreffende Nachricht auf Ports P5 und P6 kopiert wird. Jede Zeile, die einen gesetzten Eintrag (symbolisiert durch ein X) enthält, entspricht somit einem Weiterleitungsweg im Sinne der Erfindung. Leere Zeilen, wie im Beispiel Zeilen 3 bis 6, zeigen einen Port an, über den zum betreffenden Slot keine Nachrichten vorgesehen sind.

Selbstverständlich sind zu anderen Slots andere Zuordnungen möglich. Fig. 4B zeigt ein Beispiel einer Routingtabelle 42 für einen zweiten Slot t2. Für diesen Slot ist jeweils ein über Ports P3 und P4 angeschlossener Knoten als sendender Knoten zugelassen, wobei eine Nachricht von P3 auf Port P1, eine Nachricht von P4 dagegen auf P2 und P6 weitergeleitet wird.

Selbstverständlich darf zu jeweils einem Zeitpunkt nur eine Nachricht auf einen Port gesendet werden. Dies entspricht der Forderung, dass in jeder Spalte der Routingtabellen 41, 42 nicht mehr als ein Eintrag aktiv sein darf. Mit anderen Worten, die Zeilen in jeder Tabelle dürfen keine überlappenden (aktiven) Einträge aufweisen - sie sind disjunkt. Das schließt keineswegs aus, dass für verschiedene Slots in der gleichen Spalte ein Eintrag aktiv ist; in der Regel ist dann jeweils ein anderer sendender Port bezeichnet, wie dies in Fig. 4A und 4B am Beispiel der Spalte 6 (für Port P6) verdeutlicht ist.

Die Zuordnung der Routingtabellen 41, 42 beruht in dem gezeigten Ausführungsbeispiel im synchronisierten Betrieb ausschließlich auf der globalen Zeit des Kommunikationssystems (FlexRay-Systems). In jedem Slot eines TDMA-Zyklus kann eine andere Routenkonfiguration aktiv sein. Wenn eine vollständige Übertragungsrunde durchlaufen ist, beginnt die Abfolge der Slots und der zugehörenden Weiterleitung von Nachrichten von Neuem. Eine vollständige Übertragungsrunde kann beispielsweise ein TDMA-Zyklus sein (kompletter Durchlauf aller Slots). Auch kann eine Übertragunsrunde ein Vielfaches eines TDMA-Zyklus sein, insbesondere ein FlexRay-Zyklus, und dann lassen sich für jeden Slot im FlexRay-Zyklus (bis zu 64 TDMA-Zyklen) unterschiedliche Konfigurationen festlegen.

Durch die parallele Weiterleitung von Nachrichten ermöglicht der Multirouter 10 eine wesentlich verbesserte, effiziente Ausnutzung der Bandbreite in zeitgesteuerten Kommunikationssystemen. Dadurch ergibt sich auch eine Erhöhung der effektiven Bandbreite.

Zudem ergibt sich der vorteilhafte Effekt, dass fehlerhafte Knoten, die die Kommunikation stören würden (beispielsweise durch das Aussenden von Nachrichten zu unrichtigen Zeitpunkten) auf effizientere Weise behandelt werden können. Somit werden Kollisionen von Nachrichten ausgeschlossen, wodurch die Erfindung eine wesentliche Funktion eines zentralen Bus Guardians realisiert. Weitere Funktionen eines Bus Guardian, wie Signal Reshaping und strenge Checks bezüglich des Timing-Verhaltens des eintreffenden Signals, können ebenfalls in einem Sternkoppler nach der Erfindung realisiert sein. Diese Features sind allerdings für die vorliegende Erfindung nicht weiter von Bedeutung und hier nicht näher beschrieben.

Es sei darauf hingewiesen, dass im Gegensatz zu bekannten Switches, wie z.B. ein Ethernet-Switch, das Routing statisch ist: Die Information, welche Nachrichten in einem bestimmten Slot auf welche Ports verteilt werden (d.h. die Konfiguration des Routings) ist statisch, nämlich im Vorhinein konfiguriert, und kann nicht dynamisch geändert werden. Der Vorteil einer statischen Konfiguration besteht im dadurch erzielten zeitlichen Determinismus des Kommunikationssystems und der dadurch ermöglichten schnelleren und genaueren Identifiaktion von Fehlern.

Auch sei angemerkt, dass in einem Netzwerk auch mehrere Sternkoppler nach der Erfindung vorgesehen sein können. So kann, wieder bezugnehmend auf Fig. 1, an einen Multirouter 10 ein zweiter Multirouter 20 über eine der Datenleitungen, wie z.B. die Datenleitung D5, angeschlossen sein. Weitere Multirouter (nicht gezeigt) können ebenfalls angeschlossen sein, wodurch insgesamt ein geschlossenes Netzwerk gebildet wird. Als eine weitere Variante ist ein Netzwerkaufbau analog der Fig. 1 der WO 01/13230 A1 möglich, wobei an jedem der Ports eines Multirouters genau ein Knoten verbunden ist und/ oder die Multirouter zusätzlich repliziert sind, sodass jeder Knoten mit je einem Port eines Multirouters verbunden ist.

Die in dem Multirouter 10 behandelten Nachrichten werden nach einem Cut-Through-Verfahren behandelt. Dies bedeutet, dass die Daten vom Multirouter weitgehend ungebuffert weitergeleitet werden: Wenn eine auf einem Port einlangende Nachricht (z.B. N1 in Fig. 3) weitergeleitet wird, so beginnt das Senden der Nachricht (als Nachrichten N1', N1" in Fig. 3) nur wenige Bitzyklen später im Vergleich zur eintreffenden Originalnachricht, jedoch jedenfalls lange vor der Beendigung des Empfangs der Nachricht. Die geringe Verzögerung von einigen wenigen Bitzyklen entspricht der Dauer, die der vorzugsweise transienten Verarbeitung der Nachricht zur Weiterleitung im Multirouter erforderlich ist. Dies ist eine wesentliche Eigenschaft des Multirouters, die die gegenseitige Synchronizität der einzelnen Teilnetze zueinander gewährleistet.

Die Erfindung vermeidet das unter dem Namen "Masquerading" in TDMA-Systemen bekannte Problem, dass Nachrichten, die nicht der festen Zuordnung zwischen Slot und Sender entsprechen, von einem Empfänger in nicht zutreffender Weise verstanden werden, da diese Nachrichten einem anderen (vermeintlich korrekten) Sender zugeordnet werden. Dies kann zu fehlerhafter Verarbeitung des Nachrichteninhalts führen, vorallem im asynchronen Betrieb während des Hochfahrens des Systems. Ein nahe liegender Ansatz zur Vermeidung des Masquerading wäre es, in die Nachricht eine Senderkennung aufzunehmen, anhand welcher empfängerseitig eine Überprüfung auf den Sender erfolgen kann. Dies wäre natürlich mit einer Verringerung der effektiven Bandbreite verbunden und den Einsatz als "Drop-in", wie oben beschrieben, ausschließen. Die Erfindung schlägt hingegen vor, zum einen die Weiterleitung von Nachrichten auf die tatsächlich beabsichtigten Empfängerteilnetze zu beschränken, wie weiter oben anhand Fig. 3 beschrieben. Zum anderen kann zusätzlich vorgesehen sein, dass nicht konforme Nachrichten vor Beendigung des Weiterleitens zu invalidieren, was im Folgenden beschrieben wird.

Bei der Validitätsprüfung erfolgt in dem Multirouter 10 noch während des Weiterleitens einer Nachricht eine Prüfung des Inhalts der Nachricht, beispielsweise des Headers der Nachricht. Wird festgestellt, dass die Nachricht unzulässig ist, wird die Nachricht invalidiert. Dies geschieht dadurch, dass die Übertragung der Nachricht abgebrochen wird bzw. nur soweit fortgesetzt wird, als dies notwendig ist, um die Kommunikation im Netz nicht zu behindern. Beispielsweise können verbleibende Zeitschlitze vorzeitig beendet und die Nachricht mit einem Trailer abgeschlossen werden. Die Funktionalität der Invalidierung kann besonders für die Implementierung der nachfolgend diskutierten Erweiterungen der Synchronisations-Transparenz und des selektiven Aufweckens von Bedeutung sein.

Der hier behandelte Multirouter kann günstiger Weise für eine nachträgliche Integration ausgelegt sein, nämlich die Aufnahme des Betriebs wenn die angeschlossenen Teilnetze bereits in Betrieb sind. Ausgehend von einem Anfangszustand, bei dem innerhalb einzelnen Teilnetzen die Kommunikation bereits stattfindet und synchronisiert ist. Um eine rasche Aufsynchronisierung nicht nur des Multirouters, sondern auch anderer, noch nicht synchronisierter Teilnetze zu erreichen, ist eine Synchronisations-Transparenz wie folgt beschrieben zweckmäßig. Der Multirouter verwendet nach bekannter Art Synchronisationsnachrichten, um die Zeitbasis des TDMA-Systems zu bestimmen und sich auf diese zu synchronisieren. Solange dieser Prozess noch nicht erfolgreich beendet ist, somit der Multirouter noch nicht synchronisiert ist, blockiert bzw. invalidiert der Multirouter alle Nachrichten mit Ausnahme der sogenannten Hochstart-Nachrichten (Startup Frames) und Synchronisations-Nachrichten (Sync Frames). Diese Nachrichten werden konform zum FlexRay-Standard über alle Ports an alle Knotenrechner weitergeleitet. Alle anderen Nachrichten werden invalidiert oder, sofern dies rechtzeitig möglich ist, überhaupt blockiert.

Hochstart- und Synchronisations-Nachrichten sind nach bekannter Art **dadurch gekennzeichnet, dass** im Header der Nachricht spezifische Bits ('sync frame indicator'-Bit bzw. 'startap frame indicator'-Bit) gesetzt sind. Diese Bits gehören zu den ersten Bits eines Headers, werden daher frühzeitig bei der Prüfung der Nachricht erkannt. Das Invalidieren einer Nachricht erfolgt dadurch, dass der nach diesen ersten Bits verbleibende Frameinhalt geleert wird; dies geschieht beispielsweise dadurch, dass sofort nach Verarbeitung dieser Bits und der positiven Entscheidung zur Invalidierung die Datenleitung auf 'Idle' (keine Übertragung) gesetzt wird. Auf diese Weise ist für jeden empfangenden Knoten deutlich, dass die so gekennzeichnete Nachricht ungültigen Daten enthält und zu verwerfen ist.

Sobald die Synchronisation erfolgt ist, geht der Multirouter auf den Multirouting-Betrieb wie oben beschrieben über. Durch diese Vorgehensweise ist ein beschleunigtes Einsynchronsieren auch der Teilnetze möglich, selbst wenn das erfindungsgemäße Multirouting noch nicht stattfinden kann und eine vollständige Weiterleitung der gesamten anfallenden Nachrichtenmenge nicht zulässig ist, das sie zu Kommunikationfehlern führen würde.

Im nicht-synchronen Zustand des Multirouters kann zudem ein beschränktes Weiterleiten von Nachrichten vorgesehen sein, nämlich nur von jenen Teilnetzen, die Startup-fähige Knoten aufweisen, in alle anderen Netze. Fig. 5 zeigt ein Beispiel einer Routingtabelle 40 für den asynchronen Zustand (as), wenn Start-up-Knoten beispielsweise über Ports P2 und P3 angeschlossen sind. Startup- und Synchronisations-Nachrichten von diesen Ports werden ungeachtet ihres Slots an alle anderen Ports weitergeleitet; unabhängig davon werden andere Nachrichten (auch solche über P2 und P3) nicht weitergeleitet. Nachrichten dieser Art werden an in dem Header der Nachricht gesetzten Bits erkannt, wie weiter oben beschrieben aus dem FlexRay-Standard bekannt ist.

## Patentansprüche

1. Verfahren zum Weiterleiten von Nachrichten in einem zeitgesteuerten Kommunikationssystem, welches aus einer Vielzahl von Kommunikationsknoten (K1, K2,...,K64) besteht, wobei jeder Knoten über eine Datenleitung (D1,...,D6) mit einem dem Knoten eindeutig zugeordneten Port (P1,...,P6) zumindest eines Sternkopplers (10) verbunde ist, welcher Nachrichten von je einem der Ports zu einem oder mehreren anderen Ports gemäß konfigurierbaren Weiterleitungswegen weiterleitet,
wobei seitens des Sternkopplers (10) zumindest in einem synchronisierten Betriebszustand eine Umschaltung von Weiterleitungswegen nach einer im Sternkoppler festgelegten Vorschrift (41, 42) erfolgt, welche Weiterleitungswege für Nachrichten (N1, N2) beschreibt, wobei im synchronisierten Betriebszustand die Weiterleitungswege in Abhängigkeit von der Zeit gemäß einer globalen Zeitbasis des zeitgesteuerten Kommunikatiortsystems umgeschaltet werden, und wobei zu zumindest einer Zeit (t1) zumindest zwei Weiterleitungswege zugleich stattfinden, wobei zu übereinstimmenden Zeiten stattfindende Weiterleitungswege zueinander disjunkt sind, nämlich jeder Port zu jeder Zeit zu höchstens einem Weiterleitungsweg gehört,
wobei
spätestens während des Weiterleitens einer Nachricht aufgrund des Inhalts der Nachricht überprüft wird, ob die Weiterleitung der Nachricht einer Zulässigkeitsvorschrift entspricht, und in Abhängigkeit von dieser Überprüfung für jene Zielports, für die der Vorschrift nicht entsprochen ist, die Weiterleitung der Nachricht abgebrochen wird oder unter Invalidierung der Nachricht beendet wird, **dadurch gekennzeichnet, dass** diese Überprüfung aufgrund des Inhalts der Nachricht in einem nicht-synchronisierten Betriebszustand während des bereits begonnenen Weiterleitens einer Nachricht erfolgt,
wobei in dem nicht-synchronisierten Betriebszustand nur solche Nachrichten ohne Weiterleitungsabbruch oder Invalidierung weitergeleitet werden, die Hochstart-Nachrichten oder Synchronisations-Nachrichten sind.

2. Verfahren nach Anspruch 1, **dadurch gekennzeichnet, dass** für zumindest einen Teil der Nachrichten die Weiterleitung nach einem Cut-Through-Verfahren erfolgt, bei welchem die Weiterleitung einer Nachricht noch vor Beendigung des Empfangs der Nachricht begonnen wird.

3. Verfahren nach Anspruch 1 oder 2, **dadurch gekennzeichnet, dass** ein auf einem FlexRay-Standard beruhendes zeitgesteuertes Kommunikationsprotokoll verwendet wird.

4. Verfahren nach einem der Ansprüche 1 bis 3, **dadurch gekennzeichnet, dass** die Weiterleitungswege im synchronisierten Betriebszustand ausschließlich in Abhängigkeit von der Zeit gemäß der globalen Zeitbasis umgeschaltet werden.

5. Verfahren nach einem der Ansprüche 1 bis 4, **dadurch gekennzeichnet, dass** die Vorschrift in Form statischer Routinginformation, insbesondere als Konfigurationsdateien, realisiert ist.

6. Verfahren nach einem der Ansprüche 1 bis 5, **dadurch gekennzeichnet, dass** in dem zeitgesteuerten Kommunikationssystem mehrere Sternkoppler (10, 20) verwendet werden, die über eine oder mehrere Datenleitungen (D5) untereinander direkt oder indirekt verbunden sind, und ein geschlossenes Netzwerk bilden.

7. Verfahren nach einem der Ansprüche 1 bis 6, **dadurch gekennzeichnet, dass** in einem nicht-synchronisierten Betriebszustand (as) eine zeitunabhängige Vorschrift (40) für die Weiterleitung verwendet wird.

8. Verfahren nach Anspruch 7, **dadurch gekennzeichnet, dass** im nicht-synchronisierten Betriebszustand zeitunabhängig ein Weiterleitungsweg besteht und auf Grund des Nachrichteninhaltes und/oder der Port-Zuordnung entschieden wird, ob eine Nachricht weitergeleitet oder abgebrochen wird.

9. Sternkoppler (10) für ein zeitgesteuertes Kommunikationssystem, mit einer Anzahl von Ports (P1,...,P6), an die jeweils über zumindest eine Datenleitung (D1,...,D6) zumindest ein Knoten (K1, K2,...,K64) des Kommunikationssystems verbindbar ist, wobei seitens des Sternkopplers (10) Weiterleitungswege für die Weiterleitung von Nachrichten (N1, N2) von je einem der Ports zu einem oder mehreren anderen Ports konfigurierbar sind,
mit einer in dem Sternkoppler (10) festgelegte Vorschrift (41, 42), nach der zumindest in einem synchronisierten Betriebszustand eine Umschaltung von Weiterleitungswegen eingerichtet ist, wobei im synchronisierten Betriebszustand die Umschaltung in Abhängigkeit von der Zeit gemäß einer globalen Zeitbasis des zeitgesteuerten Kommunikationsystems eingerichtet ist, und wobei zu zumindest einer Zeit (t1) zumindest zwei Weiterleitungswege zugleich vorgesehen sind, wobei zu übereinstimmenden Zeiten stattfindende Weiterleitungswege zueinander disjunkt sind, nämlich jeder Port zu jeder Zeit zu höchstens einem Weiterleitungsweg gehört,
der Sternkoppler dazu eingerichtet ist, spätestens während des Weiterleiten einer Nachricht aufgrund des Inhalts der Nachricht zu überprüften, ob die Weiterleitung der Nachricht einer Zulässigkeitsvorschrift entspricht, und in Abhängigkeit von dieser Überprüfung für jene Zielports, für die der Vorschrift nicht entsprochen ist, die Weiterleitung der Nachricht abzubrechen oder unter Invalidierung der Nachricht zu beenden, **dadurch gekennzeichnet, dass** diese Überprüfung aufgrund des Inhalts der Nachricht in einem nicht-synchronisierten Betriebszustand während des bereits begonnenen Weiterleitens einer Nachricht erfolgt, und
der Sternkoppler dazu eingerichtet ist, in dem nicht-synchronisierten Betriebszustand nur solche Nachrichten ohne Weiterleitungsabbruch oder Invalidierung weiterzuleiten, die Hochstart-Nachrichten oder Synchronisations-Nachrichten sind.

## Claims

1. A method for relaying messages within a time-controlled communication system consisting of a plurality of communication nodes (K1, K2, ..., K64), wherein each node is connected, via a data line (D1, ..., D6), to a port (P1, ..., P6), uniquely assigned to said node, of at least one star coupler (10) relaying messages from respectively one of the ports to one or more other ports along configurable relaying paths,
wherein the star coupler (10), at least in a synchronized operating mode, effects a switching of relaying paths in accordance with a rule (41, 42) defined in the star coupler, said rule describing relaying paths for messages (N1, N2), wherein in the synchronized operating mode the relaying paths are switched as a function of time in accordance with a global time base of the time-controlled communication system, and wherein at at least one time (t1) at least two relaying paths occur simultaneously, wherein relaying paths that occur simultaneously are in disjunction to another such that at any time each port belongs to only one relaying path,
wherein, during the relaying of a message at the latest, a check is conducted based on the content of the message as to whether the relaying of the message complies with a rule of acceptance, and depending on the result of said check the relaying of the message is cancelled or ended by invalidating the message for those target ports not complying with said rule,
**characterised in that** said check based on the content of the message is, in a non-synchronized mode, effected during the already initiated relaying of a message,
wherein in the non-synchronized mode only messages which are start-up messages or synchronization messages are relayed without canceling the relaying or invalidating.

2. Method according to claim 1, **characterised in that** at least some of the messages are relayed according to a cut-through process, during which the relaying of a message is begun even before its reception is completed.

3. Method according to claim 1 or 2, **characterised in that** a time-controlled communication protocol is used which is based on a FlexRay standard.

4. Method according to claims 1 to 3, **characterised in that** the relaying paths in the synchronised operating mode are switched exclusively as a function of the time according to the global time base.

5. Method according to any one of claims 1 to 4, **characterised in that** the rule is realised as static routing information, such as configuration data.

6. Method according to any one of claims 1 to 5, **characterised in that** several star couplers (10, 20) are used within the time-controlled communication system, wherein said star couplers are directly or indirectly connected with each other via one or more data lines (D5) and form a closed network.

7. Method according to any one of the claims 1 to 6, **characterised in that**, in a non-synchronised operating mode (as), a time-independent rule (40) is used for relaying.

8. Method according to claim 7, **characterised in that**, in the non-synchronised operating mode, a relaying path exists independent of time, and the decision as to whether a message is relayed or cancelled is decided on the basis of the message content and/or the assignment of ports.

9. Star coupler (10) for a time-controlled communication system, having a number of ports (P1, ..., P6), to which at least one node (K1, K2, ..., K64) of the communication system can be attached respectively via at least one data line (D1, ..., D6), wherein at the star coupler (10) relaying paths can be configured for the relaying of messages (N1, N2) from respectively one of the ports to one or more other ports,
having a rule (41, 42) defined in the star coupler (10) according to which, at least in a synchronised operating mode, a switching of relaying paths is provided, wherein in the synchronized operating mode the switching is configured as a function of time in accordance with a global time base of the time-controlled communication system, and wherein at at least one time (t1) at least two relaying paths are provided to occur simultaneously, wherein relaying paths that occur simultaneously are in disjunction to another such that at any time each port belongs to only one relaying path,
wherein the star coupler is configured to conduct, during the relaying of a message at the latest, a check based on the content of the message as to whether the relaying of the message complies with a rule of acceptance and is, depending on the result of said check, configured to cancel the relaying of the message or end it by invalidating the message for those target ports not complying with said rule,
**characterised in that** said check based on the content of the message is, in a non-synchronized mode, effected during the already initiated relaying of a message, and the star coupler is configured to relay, in the non-synchronized mode, only messages which are start-up messages or synchronization messages without canceling the relaying or invalidating.

## Revendications

1. Procédé servant à transférer des informations dans un système de communication à commande temporelle, lequel système est constitué d'une pluralité de noeuds de communication (K1, K2, ..., K64), sachant que chaque noeud est relié par l'intermédiaire d'une ligne de données (D1, ..., D6) à un port (P1, ... P6) au moins d'un coupleur en étoile (10), associé de manière évidente au noeud, lequel coupleur en étoile transfère des informations depuis l'un des ports vers un ou plusieurs autres portes selon des trajets d'acheminement pouvant être configurés,
sachant qu'une commutation de trajets d'acheminement est effectuée du côté du coupleur en étoile (10) au moins dans un état de fonctionnement synchronisé selon une spécification (41, 42) fixée dans le coupleur en étoile, laquelle décrit des trajets d'acheminement pour des informations (N1, N2), sachant que dans l'état de fonctionnement synchronisé, les trajets d'acheminement sont commutés en fonction de la durée selon une base temporelle globale du système de communication à commande temporelle, et sachant qu'au moins deux trajets d'acheminement sont parcourus de manière simultanée à au moins un moment (t1), sachant que des trajets d'acheminement parcourus à des moments à faire concorder sont disjoints les uns par rapport aux autres, à savoir chaque port appartient au maximum à un trajet d'acheminement pour chaque moment,
sachant qu'on vérifie au plus tard lors du transfert d'une information sur la base du contenu de cette dernière si le transfert de l'information correspond à une spécification d'admissibilité, et qu'en fonction de cette vérification effectuée pour ces ports de destination pour lesquels il n'existe pas de correspondance avec la spécification, le transfert de ladite information est annulé ou est terminé en invalidant ladite information, **caractérisé en ce que** ladite vérification est effectuée sur la base du contenu de l'information dans un état de fonctionnement non synchronisé au cours du transfert déjà commencé d'une information,
sachant que dans l'état de fonctionnement non synchronisé, seules les informations sans interruption de transfert ou sans invalidation sont transférées, lesquelles constituent des informations relatives au démarrage ou à la synchronisation.

2. Procédé selon la revendication 1, **caractérisé en ce que** pour au moins une partie des informations, le transfert est effectué selon un procédé dit cut-through, dans le cadre duquel le transfert d'une information est commencé avant la fin de la réception de l'information.

3. Procédé selon la revendication 1 ou 2, **caractérisé en ce qu'**on utilise un protocole de communication à commande temporelle reposant sur une norme FlexRay.

4. Procédé selon l'une quelconque des revendications 1 à 3, **caractérisé en ce que** les trajets d'acheminement à l'état de fonctionnement synchronisé sont commutés exclusivement en fonction du temps selon la base temporelle globale.

5. Procédé selon l'une quelconque des revendications 1 à 4, **caractérisé en ce que** la spécification est réalisée sous la forme d'une information statique de routage, en particulier en tant que fichiers de configuration.

6. Procédé selon l'une quelconque des revendications 1 à 5, **caractérisé en ce qu'**on utilise dans le système de communication à commande temporelle plusieurs coupleurs en étoile (10, 20), lesquels sont reliés directement ou indirectement entre eux par l'intermédiaire d'une ou de plusieurs lignes de données (D5) et forment un réseau fermé.

7. Procédé selon l'une quelconque des revendications 1 à 6, **caractérisé en ce que** dans l'état de fonctionnement non synchronisé (as), on utilise une spécification (40) indépendante du temps pour le transfert.

8. Procédé selon la revendication 7, **caractérisé en ce que** dans l'état de fonctionnement non synchronisé, il existe indépendamment du temps un trajet d'acheminement, et **en ce qu'**on décide sur la base du contenu de l'information et/ou de l'attribution du port si une information est transférée ou si son transfert est interrompu.

9. Coupleur en étoile (10) pour un système de communication à commande temporelle, comportant une pluralité de ports (P1, ..., P6), auxquels au moins un noeud (K1, K2, ..., K64) du système de communication peut être relié respectivement par l'intermédiaire d'au moins une ligne de données (D1, ..., D6), sachant que des trajets d'acheminement pour le transfert d'informations (N1, N2) depuis respectivement un des ports vers un autre ou plusieurs autres ports peuvent être configurés du côté du coupleur en étoile (10),
comportant une spécification (41, 42) fixée dans le coupleur en étoile (10), selon laquelle au moins dans un état de fonctionnement synchronisé, une commutation de trajets d'acheminement est mise en place, sachant que dans l'état de fonctionnement synchronisé, la commutation est mise en place en fonction de la durée selon une base temporelle globale du système de communication à commande temporelle, et sachant qu'au moins deux trajets d'acheminement sont simultanément prévus au moins à un moment (t1), sachant que des trajets d'acheminement parcourus à des moments à faire concorder sont disjoints les uns par rapport aux autres, à savoir que chaque port est associé à chaque moment au maximum à un trajet d'acheminement,
sachant que le coupleur en étoile est mis en place afin de vérifier au plus tard au cours du transfert d'une information sur la base du contenu de l'information si le transfert de l'information correspond à une spécification d'admissibilité, et afin de décider en fonction de ladite vérification pour ces ports de destination pour lesquels il n'existe pas de correspondance avec la spécification, si le transfert de l'information doit être interrompu ou terminé en invalidant l'information, **caractérisé en ce que** la vérification est effectuée sur la base du contenu de l'information dans un état de fonctionnement non synchronisé au cours du transfert d'une information déjà commencé, et
**en ce que** le coupleur en étoile est mis en place afin de ne transférer dans l'état de fonctionnement non synchronisé, que les informations sans interruption de transfert ou invalidation, lesquelles informations constituent des informations relatives au démarrage ou à la synchronisation.
